# EUROPEAN PATENT SPECIFICATION

(11) **EP 1 211 221 B1**
(45) Date of publication and mention of the grant of the patent: **06.10.2010**
(21) Application number: 00946308.4
(22) Date of filing: 13.07.2000
(51) Int. Cl.: C01B 31/04, C04B 35/536, C09K 3/10

(54) **HEAT-RESISTANT EXPANDED GRAPHITE SHEET AND METHOD FOR PRODUCING THE SAME**
HITZEBESTÄNDIGE, EXPANDIERTE GRAPHITPLATTEN UND VERFAHREN ZU DEREN HERSTELLUNG
FEUILLE DE GRAPHITE EXPANSE THERMORESISTANTE ET PROCEDE DE PRODUCTION ASSOCIE

(30) Priority: 14.07.1999 JP 20049399
(43) Date of publication of application: 05.06.2002
(73) Proprietor: TOYO TANSO CO., LTD., Osaka-shi, Osaka 555-0011 (JP); OILES CORPORATION, Tokyo 108-0075 (JP)
(72) Inventor: SAKAIRI, Yoshikazu, Fujisawa-shi, Kanagawa-ken 252-0811 (JP); SHIMURA, Toshihiko, Fujisawa-shi, Kanagawa-ken 252-0811 (JP); KUROSE, Kohei, Fujisawa-shi, Kanagawa-ken 252-0811 (JP); KUSUYAMA, Toshiki, Nishiyodogawa-ku, Osaka-shi, Osaka 55 (JP); INOMOTO, Hideki, Toyo Tanso Co., Ltd, Mitoyo-gun, Kagawa 769-1102 (JP); KAKIMI, Hideaki, Toyo Tanso Co., Ltd, Mitoyo-gun, Kagawa 769-1102 (JP)
(74) Representative: von Kreisler Selting Werner
(86) International application number: PCT/JP2000/004717
(87) International publication number: WO 2001/005703

(56) References cited:
- EP-A- 1 146 262
- EP-A2- 0 305 984
- JP-A- 9 286 972
- JP-A- 10 101 316
- JP-A- 52 035 205
- JP-A- 55 118 987
- JP-A- 59 008 607
- US-A- 3 333 941
- US-A- 5 288 429
- US-A- 5 582 811

## Description

### Field of the Invention

The present invention relates to an expanded graphite sheet and a method for producing the same, and more particularly to an expanded graphite sheet which is excellent in heat resistance and resistance to oxidative ablation and a method for producing the same.

### Background Art

An expanded graphite sheet can be prepared as follows. For example, graphite such as natural graphite, kish graphite, pyrolytic graphite or the like is treated with concentrated sulfuric acid, concentrated nitric acid, concentrated sulfuric acid and potassium chlorate, concentrated sulfuric acid and potassium nitrate or hydrogen peroxide or like strong oxidizing agents, bromine or aluminum chloride or like halides to form an interlaminar compound, and rapidly heating fine particles of graphite incorporating the interlaminar compound (acid-treated graphite material), for example, at a temperature of 950°C or higher for 1 to 10 seconds to emit a cracked gas, whereby the interlaminar crevice of graphite is expanded by the pressure of the gas to produce expanded graphite particles. Then, the expanded graphite particles are made into a sheet by compression molding or roll molding in the presence or the absence of a binder. The expanded graphite sheet thus formed has excellent properties and is therefore effectively used in wide fields of, e.g., gaskets, sealings, heat-insulating materials, cushion materials and the like.

Among expanded graphite particles conventionally used for this kind of expanded graphite sheet, those of low expansivity, e.g. those expansible to about 20 to about 70 folds entail difficulties in molding the particles into a sheet in the absence of a binder, consequently necessitating the use of an adhesive, which raises problems of lowering the purity and degrading the properties due to the adhesive.

On the other hand, when using expanded graphite particles of high expansivity, e.g. those expansible to 200 to 300 fold, the obtained sheets can be formed from only graphite so that the sheet is highly pure and outstanding in properties. For this reason, generally expanded graphite particles of high expansivity are used today in the manufacture of expanded graphite sheets.

However, conventional expanded graphite sheets pose a problem of low heat resistance in the air, especially in the air at a temperature as high as 700°C or more, leading to oxidative ablation of graphite. Namely conventional sheets have a serious drawback of involving a high oxidative ablation factor.

In order to overcome the problem, expanded graphite sheets have been developed by a process wherein low-expansivity graphite particles are treated with phosphoric acid or phosphate for suppressing the oxidation (JP-B-54-30678). The publication discloses that the intended sheet can be formed from low-expansivity graphite particles by using phosphoric acid or phosphate without use of an adhesive. However, although the particles can be molded into sheets, the obtained sheets are unsatisfactory in the properties required by expanded graphite sheets such as mechanical properties and uniformity of sheets because of lack of an adhesive. In addition, the publication also describes that the resistance to oxidation is improved. But the improvement was found insufficient. Especially when the sheet is exposed to the air at a high temperature for a long time, it suffers from an intensive oxidative ablation. In short, the disclosed sheets are far from satisfactory. JP-A-52-35205 and JP-A-9-286972 disclose expanded graphite that is produced by the addition of phosphoric acid or a phosphoric acid as an antioxidant.

The invention has been completed to obviate the foregoing problems. Thus, an object of the invention is to provide an expanded graphite sheet which shows a low oxidative ablation factor in the air even when exposed to the air under high temperature conditions of 700°C or more for a long time, the sheet being excellent in heat resistance and favorable in other properties as required by this kind of expanded graphite sheet, and also a method for preparing the same.

### Disclosure of the Invention

The inventors of the invention conducted extensive research to achieve the above-mentioned object and found that expanded graphite sheets containing phosphorus pentoxide and phosphate in specified proportions are superior in heat resistance, low in the oxidative ablation factor in the air even on exposure to the air under high temperature conditions of 700°C or higher for a long time and satisfactory in other properties required by this kind of expanded graphite sheet. The present invention was accomplished based on these findings. The summary of the invention is as follows.

A heat-resistant, expanded graphite sheet according to a first embodiment of the invention contains phosphorus pentoxide and phosphate.

The heat-resistant, expanded graphite sheet according to the invention contains phosphorus pentoxide and phosphate so that the sheet is remarkable in heat resistance and low in the oxidative ablation factor in the air even on exposure to the air under high temperature conditions of 700°C or higher for a long time and can be applied for various purposes under high temperature conditions. The sheets have the properties required by this kind of expanded graphite sheet and are satisfactory in other properties.

In the heat-resistant, expanded graphite sheet according to the invention, the graphite sheet containing less than 0.05% by weight of phosphorus pentoxide can not significantly reduce the oxidative ablation factor, and the sheet containing more than 5.0% by weight thereof fails to lower the oxidative ablation factor. Further when the content of phosphate is less than 1% by weight, the sheet can not sufficiently reduce the oxidative ablation factor, whereas the content of more than 16% by weight tends to harden the sheet, thus resulting in degraded flexibility of the graphite sheet.

In a preferred embodiment of the invention the phosphate incorporated in the sheet is selected from monobasic lithium phosphate, dibasic lithium phosphate, monobasic calcium phosphate, dibasic calcium phosphate, monobasic aluminum phosphate and dibasic aluminum phosphate.

The heat-resistant, expanded graphite sheet according to the invention is exhibits less than 10% in the oxidative ablation factor on exposure to the air under high temperature conditions of 700°C for 3 hours.

The heat-resistant, expanded graphite sheet according to the invention contains phosphorus pentoxide and phosphate in the above specified amounts so that the sheet is remarkable in heat resistance and very low in the oxidative ablation factor even on exposure to the air under high temperature conditions for a long time.

A method for producing the heat-resistant, expanded graphite sheet according to the invention comprises the steps of adding phosphate to a acid-treated graphite material treated with a strong acid and phosphoric acid, drying the mixture, subjecting the dried mixture to expansion treatment to give expanded graphite particles, and making the particles into a sheet by compression molding or roll molding.

An alternative method for producing the heat-resistant, expanded graphite sheet according to the invention comprises the steps of adding phosphoric acid and phosphate to a acid-treated graphite material treated with a strong acid, drying the mixture, subjecting the dried mixture to expansion treatment to give expanded graphite particles, and making the particles into a sheet by compression molding or roll molding.

Useful strong acids include, for example, sulfuric acid. The expansion operation may be conducted preferably by expanding the graphite to 200 to 300 folds at an expansion temperature of 900°C or higher, preferably 950 to 1200°C.

In a preferred embodiment of the method for producing a heat-resistant, expanded graphite sheet according to the invention the phosphoric acid to be used is selected from orthophosphoric acid, metaphosphoric acid, polyphosphoric acid and polymetaphosphoric acid.

In the method for producing a heat-resistant, expanded graphite sheet according to the invention, the phosphoric acid uniformly dispersed in the acid-treated graphite material forms phosphorus pentoxide (P₂O₅) on dehydration reaction in thermal expansion treatment and it is incorporated in a specified proportion throughout the sheet by compression molding or roll molding.

In a preferred embodiment of the method for producing a heat-resistant, expanded graphite sheet according to the invention the phosphate to be used is selected from monobasic lithium phosphate, dibasic lithium phosphate, monobasic calcium phosphate, dibasic calcium phosphate, monobasic aluminum phosphate and dibasic aluminum phosphate.

The phosphate uniformly incorporated in the acid-treated graphite material is dispersed as the phosphate throughout the sheet with substantially no change in the thermal expansion treatment. Consequently the heat-resistant, expanded graphite sheet produced by the method contains specified proportions of phosphorus pentoxide and phosphate.

The mode for carrying out the invention will be described in more detail.

The method for producing a heat-resistant, expanded graphite sheet will be described.

The term "acid-treated graphite material" used herein refers to a raw material conventionally used which is prepared by treating graphite with sulfuric acid and an oxidizer by conventional methods and drying the treated graphite in the conventional manner. Stated more specifically, graphite is treated with a known oxidizer such as hydrogen peroxide or the like and with a strong acid such as sulfuric acid, and the treated graphite is dried at 100 to 120°C in the conventional manner. The invention includes a graphite material treated with phosphoric acid together with sulfuric acid. The acid-treated graphite material will be described in more detail.
(A) Graphite material treated with sulfuric acid
(B) Graphite material treated with sulfuric acid and phosphoric acid
In the present invention, any one of the above-mentioned acid-treated graphite materials is used.

Using any of these acid-treated graphite materials, in the case of A, phosphoric acid and phosphate are added at the same time, or phosphoric acid is added first, and phosphate is added; or optionally in the case of B, phosphate is added. Thereafter, the graphite is expanded in the conventional manner to 200 to 300 fold preferably at an expansion temperature of 950 to 1200°C, and is made into a sheet.

Extensively usable as this kind of graphite are a variety of graphite materials such as natural graphite, kish graphite and pyrolytic graphite which have been conventionally employed.

The phosphoric acid to be uniformly incorporated into the acid-treated graphite powder is selected from orthophosphoric acid (H₃PO₄), metaphosphoric acid (HPO₃), polyphosphoric acid, more specifically pyrophosphoric acid (H₄P₂O₇) and tripolyphosphoric acid (H₅P₈O₁₀) and like chain condensed phosphoric acids, polymetaphosphoric acid, more specifically trimetaphosphoric acid, tetrametaphosphoric acid and like cyclic condensed phosphoric acids. These phosphoric acids are used in the form of an aqueous solution.

Examples of phosphate to be uniformly dispersed along with phosphoric acid are monobasic phosphate and dibasic phosphate, preferably alkali metal salts and alkaline earth metal salts, more preferably lithium and calcium. Aluminum salts are also usable as metal salts. Specific examples are monobasic lithium phosphate (LiH₂PO₄), dibasic lithium phosphate (Li₂HPO₄), monobasic calcium phosphate [Ca(H₂PO₄)₂], dibasic calcium phosphate (CaHPO₄), monobasic aluminum phosphate [Al(H₂PO₄)₃], dibasic aluminum phosphate [Al₂(HPO₄)₃], etc. These phosphates are used in the form of an aqueous solution or a suspension.

Thereafter the expanded graphite material is treated preferably at a temperature of 950 to 1200°C for about 1 to about 10 seconds to give off a cracked gas, whereby the interlaminar crevice of graphite is expanded by the gas pressure to provide graphite particles expanded to 200 to 300 fold, and the expanded graphite particles are made into a sheet by compression molding or roll molding.
The thus-obtained expanded graphite sheet contains phosphate and the phosphorus pentoxide (P₂O₅) generated by dehydration reaction of phosphoric aid. The heat resistance and the oxidative ablation factor of the expanded graphite sheet are variable depending on the contents of phosphorus pentoxide and phosphate present in the sheet.

It was confirmed in the invention that an expanded graphite sheet is superior in heat resistance and in resistance to oxidative ablation when the sheet contains 0.05 to 5.0% by weight, preferably 0.2 to 2.0% by weight, of phosphorus pentoxide and 1 to 16% by weight, preferably 2 to 10% by weight, of phosphate.

The content of less than 0.05% by weight of phosphorus pentoxide in the sheet can not significantly reduce the oxidative ablation factor of the sheet, and the content of more than 5.0% by weight thereof is unlikely to markedly lower the oxidative ablation factor of the sheet and, what is worse, is responsible for emission of white smoke on formation of phosphorus pentoxide by dehydration reaction of phosphoric acid, resulting in undesirable environment in terms of hygiene.

When the content of phosphate is less than 1% by weight, the oxidative ablation factor is not sufficiently reduced, whereas the content of more than 16% by weight tends to harden a graphite sheet on formation of graphite sheet, thus resulting in degraded flexibility of graphite sheet.

The expanded graphite sheet of the invention which contains 0.05 to 5.0% by weight of phosphorus pentoxide and 1 to 16% by weight of phosphate has the following properties:
thickness (mm): 0.2 to 1.5
bulk density (g/cm³): 0.8 to 1.1
tensile strength (kgf/cm²), %): 40 to 60
compressibility (70 kgf/cm², %): 10 to 25
recovery (70 kgf/cm², %): 25 to 45
(Note: 1 kgf = 6.81N)

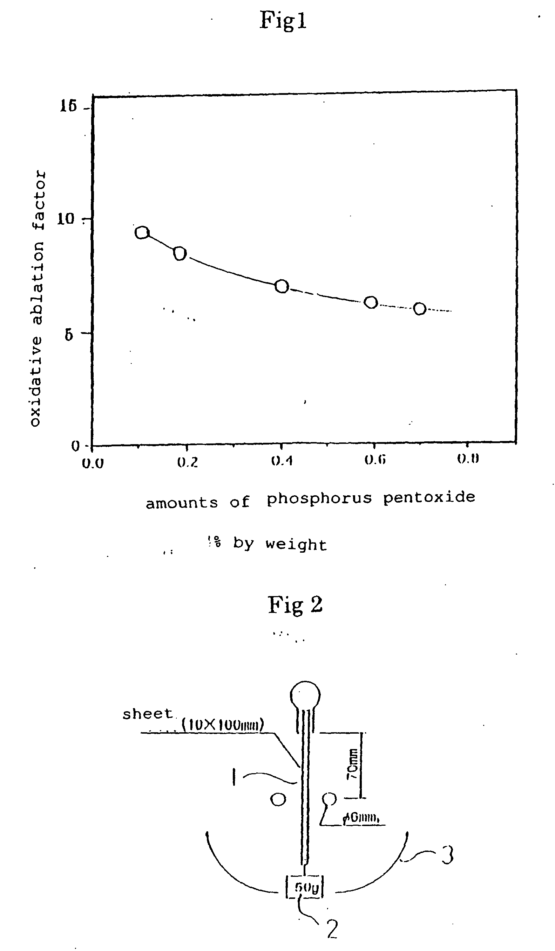

Fig.1 shows the results of a test for oxidative ablation factor of expanded graphite sheets of the invention containing 4% by weight of phosphate (monobasic aluminum phosphate) and varied amounts of phosphorus pentoxide.

It is apparent from the graph showing the test results that the expanded graphite sheet containing phosphorus pentoxide and phosphate is less than 10% in the oxidative ablation factor and is very low in the weight loss ratio even under severe conditions of 700°C and 3 hours.

### Brief Description of the Drawings

Fig.1 is the graph showing the results of a test for oxidative ablation factor of expanded graphite sheets containing 4% by weight (constant amount) of phosphate (monobasic aluminum phosphate) and varied amounts of phosphorus pentoxide. The graph shows an oxidative ablation factor of expanded graphite sheets in terms of weight loss ratio which were left to stand in the air maintained at a temperature of 700°C for 3 hours.
Fig.2 is a view showing an example of a tester for evaluating the flexibility of the graphite sheet.

### Field of the Invention

The heat-resistant, expanded graphite sheets of the invention are remarkable in heat resistance and resistance to oxidative ablation and are used for gaskets, sealings, heat-insulating materials, cushion materials or the like.

### Best Mode for Carrying out the Invention

The present invention will be described below in more detail with reference to the following examples to which, however, the invention is not limited insofar as an embodiment is not deviated from the intended scope of the invention.

### Examples 1 to 20

While stirring 300 parts by weight of concentrated sulfuric acid (conc.98%), 5 parts by weight of 60% aqueous solution of hydrogen peroxide was added as an oxidizing agent to provide a reaction mixture. The reaction mixture was cooled to 10°C and maintained at this temperature. One hundred parts by weight of 595-177 µm (30 - to 80-mesh) natural flaky graphite powder was added. The mixture underwent a reaction for 30 minutes. After the reaction, the acid-treated graphite was separated by suction filtration, and was stirred in 300 parts by weight of water for 10 minutes for suction filtration. This washing operation was repeated twice to remove sufficiently the sulfuric acid portion from the acid-treated graphite

After sufficient removal of sulfuric acid, the acid-treated graphite was dried for 3 hours in a drying furnace maintained at 110°C to provide an acid-treated graphite material.

While stirring 100 parts by weight of the acid-treated graphite material, a solution was sprayed over the acid-treated graphite material, the solution being prepared by diluting, with 10 parts by weight of methanol, 0.16 to 3.5 parts by weight of an aqueous solution of orthophosphoric acid (conc.84%) serving as phosphoric acid, and 2 to 38 parts by weight of an aqueous solution of monobasic aluminum phosphate (conc.50%) serving as phosphate. Then, a humid mixture was obtained by uniform stirring.

The humid mixture was dried in a drying furnace maintained at 120°C for 2 hours.

Then the mixture was treated at 1000°C for 5 seconds to give off a cracked gas. The interlaminar crevice in the graphite was expanded by the gas pressure to provide expanded graphite particles (expansion ratio 240 fold). In this expanding operation, the orthophosphoric acid used as one of the components underwent a dehydration reaction to generate phosphorus pentoxide. The monobasic aluminum phosphate was confirmed to co-exist with phosphorus pentoxide with no or little change. The obtained expanded graphite particles were made into a sheet having a thickness of 0.36 mm by roll molding at a roll space of 0.33 mm.

The composition of components in the thus-obtained expanded graphite sheet and the results of a test for oxidative ablation factor of the sheet are shown in Tables 1 to 5. The values in the composition of components in the tables are expressed in % by weight.

The oxidative ablation factor in the expanded graphite sheet was evaluated after allowing the expanded graphite sheet to stand in the air maintained at 700°C for 3 hours and was expressed in terms of weight loss ratio (%).

**Table 1**

| | Example | | | |
|---|---|---|---|---|
| | 1 | 2 | 3 | 4 |
| Expanded graphite | 98.9 | 95.9 | 93.9 | 91.9 |
| Phosphorus pentoxide | 0.1 | 0.1 | 0.1 | 0.1 |
| Phosphate | | | | |
| Monobasic aluminum phosphate | 1.0 | 4.0 | 6.0 | 8.0 |
| Weight loss ratio | 9% | 9% | 8% | 8% |

**Table 2**

| | Example | | | |
|---|---|---|---|---|
| | 5 | 6 | 7 | 8 |
| Expanded graphite | 97.8 | 95.6 | 93.8 | 91.8 |
| Phosphorus pentoxide | 0.2 | 0.2 | 0.2 | 0.2 |
| Phosphate | | | | |
| Monobasic aluminum phosphate | 2.0 | 4.0 | 6.0 | 8.0 |
| Weight loss ratio | 9% | 8% | 6% | 5% |

**Table 3**

| | Example | | | |
|---|---|---|---|---|
| | 9 | 10 | 11 | 12 |
| Expanded graphite | 89.8 | 87.8 | 85.8 | 83.8 |
| Phosphorus pentoxide | 0.2 | 0.2 | 0.2 | 0.2 |
| Phosphate | | | | |
| Monobasic aluminum phosphate | 10.0 | 12.0 | 14.0 | 16.0 |
| Weight loss ratio | 5% | 5% | 5% | 5% |

**Table 4**

| | Example | | | |
|---|---|---|---|---|
| | 13 | 14 | 15 | 16 |
| Expanded graphite | 95.6 | 91.6 | 95.3 | 91.3 |
| Phosphorus pentoxide | 0.4 | 0.4 | 0.7 | 0.7 |
| Phosphate | | | | |
| Monobasic aluminum phosphate | 4.0 | 8.0 | 4.0 | 8.0 |
| Weight loss ratio | 6% | 5% | 5% | 5% |

**Table 5**

| | Example | | | |
|---|---|---|---|---|
| | 17 | 18 | 19 | 20 |
| Expanded graphite | 95.0 | 91.0 | 99.5 | 94.0 |
| Phosphorus pentoxide | 1.0 | 1.0 | 1.5 | 2.0 |
| Phosphate | | | | |
| Monobasic aluminum phosphate | 4.0 | 8.0 | 4.0 | 4.0 |
| Weight loss ratio | 5% | 5% | 5% | 5% |

### Examples 21 to 28

Each acid-treated graphite material was prepared in the same manner as in Example 1.
While stirring 100 parts by weight of the acid-treated graphite material, a solution was sprayed over the acid-treated graphite material, the solution being prepared by diluting, with 20 parts by weight of methanol, 0.7 to 1.4 parts by weight of an aqueous solution of orthophosphoric acid (conc.84%) serving as phosphoric acid, and 4.0 to 17.4 parts by weight of an aqueous solution of monobasic calcium phosphate (conc.50%) serving as phosphate. Then, a humid mixture was obtained by uniform stirring. Expanded graphite particles (expansion ratio 240 fold) were prepared in the same manner as in Example 1. Subsequently expanded graphite sheets were produced in the same manner as in Example 1.

The composition of components in the thus-obtained expanded graphite sheet and the results of a test for an oxidative ablation factor of the sheet are shown in Tables 6 and 7. The values in the composition of components in the tables are expressed in % by weight. The oxidative ablation factor in the expanded graphite sheet was evaluated by the same method as in the previous examples.

**Table 6**

| | Example | | | |
|---|---|---|---|---|
| | 21 | 22 | 23 | 24 |
| Expanded graphite | 97.6 | 95.6 | 93.6 | 91.6 |
| Phosphorus pentoxide | 0.4 | 0.4 | 0.4 | 0.4 |
| Phosphate | | | | |
| Monobasic calcium phosphate | 2.0 | 4.0 | 6.0 | 8.0 |
| Weight loss ratio | 9% | 9% | 6% | 6% |

**Table 7**

| | Example | | | |
|---|---|---|---|---|
| | 25 | 26 | 27 | 28 |
| Expanded graphite | 97.4 | 95.4 | 95.2 | 93.2 |
| Phosphorus pentoxide | 0.6 | 0.6 | 0.8 | 0.8 |
| Phosphate | | | | |
| Monobasic calcium phosphate | 2.0 | 4.0 | | 4.0 6.0 |
| Weight loss ratio | 9% | 6% | 6% | 6% |

### Comparative Examples 1 to 5

Each acid-treated graphite material was prepared in the same manner as in Example 1.
While stirring 100 parts by weight of the acid-treated graphite material, 0.3 to 1.7 parts by weight of an aqueous solution of orthophosphoric acid (conc.84%) serving as phosphate was sprayed over the graphite material. Then, a humid mixture was obtained by uniform stirring. Expanded graphite particles expansion ratio 250 fold) were prepared in the same manner as in Example 1. Subsequently expanded graphite sheets were produced in the same manner as in Example 1.

The composition of components in the thus-obtained expanded graphite sheet and the test results as to the oxidative ablation factor of the sheet are shown in Table 8. The values in the composition of components in the tables are expressed in % by weight. The oxidative ablation factor of the expanded graphite sheet was evaluated by the same method as in the previous examples.

**Table 8**

| | Comparative Example | | | | |
|---|---|---|---|---|---|
| | 1 | 2 | 3 | 4 | 5 |
| Expanded graphite | 99.8 | 99.6 | 99.4 | 99.2 | 99.0 |
| Phosphorus pentoxide | 0.2 | 0.4 | 0.6 | 0.8 | 1.0 |
| Weight loss ratio | 40% | 18% | 16% | 15% | 15% |

### Comparative Examples 6 to 9

Each acid-treated graphite material was prepared in the same manner as in Example 1.
While stirring 100 parts by weight of the acid-treated graphite material, a solution was sprayed over the acid-treated graphite material, the solution being prepared by diluting, with 30 parts by weight of methanol, 8.4 to 38 parts by weight of an aqueous solution of monobasic aluminum phosphate (conc.50%) serving as phosphate. Then, a humid mixture was obtained by uniform stirring. Expanded graphite particles (expansion ratio 230 fold) were prepared in the same manner as in Example 1. Subsequently expanded graphite sheets were produced in the same manner as in Example 1.

The composition of components in the thus-obtained expanded graphite sheet and the results of a test for an oxidative ablation factor of the sheet are shown in Table 9. The values in the composition of components in the table are expressed in % by weight. The oxidative ablation factor in the expanded graphite sheet was evaluated by the same method as in the previous examples.

**Table 9**

| | Comparative Example | | | |
|---|---|---|---|---|
| | 6 | 7 | 8 | 9 |
| Expanded graphite | 96 | 92 | 88 | 84 |
| Monobasic aluminum phosphate | 4 | 8 | 12 | 16 |
| Weight loss ratio | 43% | 39% | 25% | 24% |

The expanded graphite sheets of Examples 1 to 28 contain phosphate and the phosphorus pentoxide formed by dehydration reaction. Therefore it is clear that the sheets exhibit a synergistic effect due to the two compounds even under high temperature conditions of 700°C, and the sheets show very low values in the oxidative ablation factor (weight loss ratio) and have heat resistance. On the other hand, the expanded graphite sheets of Comparative Examples containing either phosphoric acid or phosphate in the expanded graphite display a high oxidative ablation factor (weight loss ratio). Among others, it is clear that the expanded graphite sheets containing phosphate alone (Comparative Examples 6 to 9) show significantly high oxidative ablation factor and accordingly are inferior in heat resistance.

The expanded graphite sheets of Examples 8 and 15 have properties as shown in Table 10.

**Table 10**

| | | Unit | Ex.8 | Ex.15 | Known product |
|---|---|---|---|---|---|
| Thickness | | mm | 0.37 | 0.36 | 0.38 |
| Measured density | | g/cm³ | 1.07-1.13 | 1.07-1.13 | 1.07-1.13 |
| Tensile strength ^{*)} | | Kgf/cm² | 50.4 | 52.1 | 55.3 |
| Compressibility ^{*)} | 70 kgf/cm² | | 16.4 | 21.7 | 18.9 |
| | 350 kgf/cm² | % | 40.7 | 44.7 | 41.5 |
| Recovery ^{*)} | 70 kgf/cm² | | 39.5 | 30.6 | 38.6 |
| | 350 kgf/cm² | | 18.3 | 17.2 | 19.0 |
| Stress relaxation | | % | % 1.5 | 1.2 | 0.8 |
| Flexibility | Widthwise | Frequency | 10 | 12 | 13 |
| | Lengthwise | | 20 | 23 | 23 |
| Electrical resistance (planewise) | | µΩcm | 870 | 810 | 850 |
| Oxidative ablation (700°C/3 hr) | | % | 5 | 5 | 98 |

| | | | | | |
|---|---|---|---|---|---|
| ^{*)} 70 kgf/cm² = 686 N/cm² ; 350 kgf = 3.43 kN/cm² ; 1 kgf=9.81 N | | | | | |

It is evident from Table 10 that the expanded graphite sheets of Examples 8 and 15 which show a very low oxidative ablation factor and heat resistance have inherent properties of expanded graphite sheets without any degradation, and are comparable in properties with known expanded graphite sheets. The known product shown in Table 10 is a commercially available product manufactured by Toyo Tanso Co., Ltd., trade name "Model No.PF-38D". The flexibility in Table 10 was evaluated by a tester shown in Fig.2. A sample with a breadth of 10 mm and a length of 100 mm (expanded graphite sheet) was alternately bent at an angle of 90 degrees. The flexibility was evaluated in terms of bending frequency as counted until the sample became broken. In Fig.2, the sample is designated 1, a 50 g weight is indicated at 2 and the bending range is designated 3.

As apparent from the Examples, the expanded graphite sheets of the invention, due to specified amounts of phosphorus pentoxide and phosphate in the sheet, show heat resistance and a markedly low oxidative ablation factor even under high temperature conditions of 700°C or higher, and possess inherent properties of expanded graphite sheets without any degradation which are comparable in properties with conventional expanded graphite sheets.

### Industrial Applicability of the Invention

As stated above, the expanded graphite sheets of the invention are remarkable in heat resistance and resistance to oxidative ablation and can be effectively used as gaskets, sealings, heat-insulating materials, cushion materials, etc.

## Claims

1. A heat-resistant, expanded graphite sheet containing phosphorus pentoxide and phosphate, **characterized in that** the content of phosphorus pentoxide is 0.05 to 5.0% by weight and the content of phosphate is 1 to 16% by weight.

2. The heat-resistant, expanded graphite sheet according to claim 1, wherein the phosphate is selected from monobasic lithium phosphate, dibasic lithium phosphate, monobasic calcium phosphate, dibasic calcium phosphate, monobasic aluminum phosphate and dibasic aluminum phosphate.

3. A method for producing the heat-resistant, expanded graphite sheet as defined in claim 1, the method comprising adding phosphate to an acid-treated graphite material treated with a strong acid and phosphoric acid.

4. A method for producing the heat-resistant, expanded graphite sheet as defined in claim 1, the method comprising adding phosphoric acid and phosphate to an acid-treated graphite material treated with a strong acid.

5. The method according to any of claims 3 or 4, wherein the phosphoric acid is selected from orthophosphoric acid, metaphosphoric acid, polyphosphoric acid and polymetaphosphoric acid.

6. The method according to any of claims 3 to 5, wherein the phosphate is selected from monobasic lithium phosphate, dibasic lithium phosphate monobasic calcium phosphate, dibasic calcium phosphate, monobasic aluminum phosphate and dibasic aluminum phosphate.

7. Use of the heat-resistant, expanded graphite sheet of claim 1 or 2 as gasket, sealing, heat-insulating material, or cushion material.

## Patentansprüche

1. Wärmebeständige Blähgraphitfolie, die Phosphorpentoxid und Phosphat enthält, **dadurch gekennzeichnet, dass** der Gehalt an Phosphorpentoxid 0,05 bis 5,0 Gew.-% beträgt und der Gehalt an Phosphat 1 bis 16 Gew.-% beträgt.

2. Wärmebeständige Blähgraphitfolie gemäß Anspruch 1, wobei das Phosphat aus Lithiumdihydrogenphosphat, Lithiumhydrogenphosphat, Calciumdihydrogenphosphat, Calciumhydrogenphosphat, Aluminiumdihydrogenphosphat und Aluminiumhydrogenphosphat ausgewählt ist.

3. Verfahren zur Herstellung der wärmebeständigen Blähgraphitfolie gemäß Anspruch 1, wobei das Verfahren das Hinzufügen von Phosphat zu einem säurebehandelten Graphitmaterial, das mit einer starken Säure und Phosphorsäure behandelt ist, umfasst.

4. Verfahren zur Herstellung der wärmebeständigen Blähgraphitfolie gemäß Anspruch 1, wobei das Verfahren das Hinzufügen von Phosphorsäure und Phosphat zu einem säurebehandelten Graphitmaterial, das mit einer starken Säure behandelt ist, umfasst.

5. Verfahren gemäß einem der Ansprüche 3 oder 4, wobei die Phosphorsäure aus Orthophosphorsäure, Metaphosphorsäure, Polyphosphorsäure und Polymetaphosphorsäure ausgewählt ist.

6. Verfahren gemäß einem der Ansprüche 3 bis 5, wobei das Phosphat aus Lithiumdihydrogenphosphat, Lithiumhydrogenphosphat, Calciumdihydrogenphosphat, Calciumhydrogenphosphat, Aluminiumdihydrogenphosphat und Aluminiumhydrogenphosphat ausgewählt ist.

7. Verwendung der wärmebeständigen Blähgraphitfolie gemäß Anspruch 1 oder 2 als Dichtungsring, Dichtung, Wärmeisolationsmaterial oder Polstermaterial.

## Revendications

1. Feuille de graphite expansé, résistant à la chaleur, contenant du pentoxyde de phosphore et du phosphate, **caractérisée en ce que** la teneur en pentoxyde de phosphore est 0,05 à 5,0 % en poids, et la teneur en phosphate est 1 à 16 % en poids.

2. Feuille de graphite expansé, résistant à la chaleur, selon la revendication 1, dans laquelle le phosphate est choisi parmi le dihydrogénophosphate de lithium, l'hydrogénophosphate de lithium, le dihydrogénophosphate de calcium, l'hydrogénophosphate de calcium, le dihydrogénophosphate d'aluminium et l'hydrogénophosphate d'aluminium.

3. Procédé pour produire la feuille de graphite expansé, résistant à la chaleur, comme définie dans la revendication 1, le procédé comprenant l'étape consistant à ajouter du phosphate à un matériau de graphite traité d'acide, qui a été traité avec un acide fort et l'acide phosphorique.

4. Procédé pour produire la feuille de graphite expansé, résistant à la chaleur, comme définie dans la revendication 1, le procédé comprenant l'étape consistant à ajouter de l'acide phosphorique et du phosphate à un matériau de graphite traité d'acide, qui a été traité avec un acide fort.

5. Procédé selon l'une quelconque des revendications 3 ou 4, dans lequel l'acide phosphorique est choisi parmi l'acide orthophosphorique, l'acide métaphosphorique, l'acide polyphosphorique et l'acide polymétaphosphorique.

6. Procédé selon l'une quelconque des revendications 3 à 5, dans lequel le phosphate est choisi parmi le dihydrogénophosphate de lithium, l'hydrogénophosphate de lithium, le dihydrogénophosphate de calcium, l'hydrogénophosphate de calcium, le dihydrogénophosphate d'aluminium et l'hydrogénophosphate d'aluminium.

7. Utilisation de la feuille de graphite expansé, résistant à la chaleur, selon la revendication 1 ou 2 en tant que rondelle de joint, joint d'étanchéité, matériau isolant thermique ou un matériau d'amortissement.
